# EUROPEAN PATENT SPECIFICATION

(11) **EP 2 223 466 B1**
(45) Date of publication and mention of the grant of the patent: **29.04.2015**
(21) Application number: 08845016.8
(22) Date of filing: 09.10.2008
(51) Int. Cl.: H04L 12/24, H04L 12/26

(54) **TOPOLOGY DISCOVERY IN HETEROGENEOUS NETWORKS**
TOPOLOGIEENTDECKUNG IN HETEROGENEN NETZEN
DÉCOUVERTE DE TOPOLOGIE DANS DES RÉSEAUX HÉTÉROGÈNES

(30) Priority: 01.11.2007 US 933692
(43) Date of publication of application: 01.09.2010
(73) Proprietor: Telefonaktiebolaget LM Ericsson (publ), 164 83 Stockholm (SE)
(72) Inventor: MAHOP, Paul Vital, Montréal Québec H4P 1T7 (CA); LEMIEUX, Yves, Kirkland Québec H9H 4M1 (CA)
(74) Representative: Hoffmann Eitle
(86) International application number: PCT/IB2008/054149
(87) International publication number: WO 2009/057005

(56) References cited:
- EP-A- 1 701 489
- EP-A- 1 780 943
- ANDY BIERMAN CISCO SYSTEMS ET AL: "Physical Topology Discovery Protocol and MIB; draft-ietf-ptopomib-pdp-03.txt" IETF STANDARD-WORKING-DRAFT, INTERNET ENGINEERING TASK FORCE, IETF, CH, vol. ptopomib, no. 3, 16 November 1998 (1998-11-16), XP015025949 ISSN: 0000-0004
- BREITBART Y ET AL: "Topology discovery in heterogeneous IP networks" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 1, 26 March 2000 (2000-03-26), pages 265-274, XP010376028 ISBN: 978-0-7803-5880-5
- DAOYAN YANG HUAWEI TECHNOLOGIES CO ET AL: "Y.123.qos (Rev.11); TD 69 Rev.1" ITU-T DRAFT STUDY PERIOD 2005-2008, INTERNATIONAL TELECOMMUNICATION UNION, GENEVA ; CH, vol. STUDY GROUP 13, 16 January 2006 (2006-01-16), pages 1-18, XP017410084

## Description

### TECHNICAL FIELD

The present invention relates to topology discovery in a communication network, and more particularly, to topology discovery in heterogeneous networks.

### BACKGROUND

A network can be considered as a collection of linked devices called nodes, each of which is connected to at least one other node. A node may include a switching device having wired, optical and/or wireless connections. For example, a node may be a router or switch handling packet streams, a combination router-switch handling connections and packet traffic, a hub, computer, personal digital assistant, cell phone, or set top box. A node may support a large number of information sources and receivers that dynamically exchange information, or have fixed source/receiving roles, of varying activity. Additionally, the physical layout of a network often is designed to handle an expected amount of traffic flow and required levels of accessibility and quality of service (QoS).

The physical layout and inter-connectivity of nodes significantly affect the efficiency, reliability, and overall performance of a network. Thus, a network manager must have accurate knowledge of a network's physical and logical organization to address service disruption resulting from device or link failures and to plan and implement changes to the network (e.g., enhancements, changes in load).

However, it is difficult to manually determine a network's physical and logical organization of a rapidly changing network with a large and increasing number of nodes. The volume of information for this task most often is too large and complex for a human to collect Additionally, a network administrator is faced with the challenging task of routing information via a number of alternative inter-nodal paths to ensure connectivity and quality of service. As the number of nodes increases, so too does the number of alternative internodal connection patterns.

Furthermore, the advent of IP-based next-generation network (NGN) architectures introduces additional challenges. NON architectures converge numerous single-purpose fixed and mobile networks and services (e.g., voice, data, video and other rich media) to offer a myriad of applications (e.g., IP telephony, Web browsing, e-mail, video on demand (VoD), IPTV, gaming, and video conferencing). For instance, the different services have different requirements on the underlying network structure, such as the sensitivity of voice and video services to delay, jitter and bandwidth variations. These constraints, as well as the introduction of new hardware and protocols to support applications offered in NGN, require a high degree of management from an operator. Detecting, diagnosing and correcting localized malfunctions in NGNs become even more intricate as the number of interconnected nodes increases.

To adequately address these concerns, the network topology (i.e., the network's physical and logical organization) must be known and continually updated to account for elements such as system load, failures, effective network routing, and changes such as enhancements. Such a system analysis tool should include a way for topology synthesis and network visualization to produce a visualized network model. The visualized network model forms a basis for interpreting collected data to ensure QoS, and to produce network diagnostics and troubleshooting instructions. Additionally, the visualized network model may be used for network-planning functions based on condensing collected data and mapping the condensed data on the visualized network model. The use of a distributed tool (software or protocol) is necessary as the volume of information would be enormous.

The discovery of topology is a software-based tool (and may be distributed through the network) that extracts information of the network automatically and derives the network topology from this information. The best discovery tools would be capable of precisely determining the elements of layer-3 topology (e.g., logical level, router interconnections) and layer-2 topology (e.g., switches, bridges and host stations) and on a continuous basis so that changes occurring in the network are directly identified.

Known techniques of topology discovery differ between logical and physical topology. With respect to logical topology, three steps are generally used. The first step involves sending packets throughout the network to find routers (e.g., Ping and Traceroute). The second step involves grouping multiple IP addresses into nodes representing routers. The last step involves identifying and locating the routers found. Sends can be made by brute force (i.e., by questioning all possible routers), or by target survey (only routers most likely to belong to the network). To extract good information from the results of such interrogations, redundant results coming from two different requests must be eliminated, aliases of the routers must be resolved (i.e., to associate IP addresses of the various interfaces of a router in only one node), and routers should be identified and annotated (i.e., determine which router among the routers discovered belong to the network considered, if required to find their geographic positions and their roles in the network). The Domain Name System (DNS) is generally helpful in this regard.

However, known solutions of logical topology discovery have limitations and drawbacks. For instance, the tool Ping is used to determine whether a machine is active or not. With this intention, the ping command sends an ICMP packet to a machine. If the ping message is answered, the machine is determined to be active. Broadcast Ping is an alternative of Ping and functions by sending ICMP packets to multiple addresses by broadcast. If a machine forms part of the field of the broadcast, it will answer and the sender will receive responses from all the machines of the group. While this is useful in the determination of a network under a host, Broadcast Ping it is not universally supported.

The DNS stores a great quantity of information on the nodes of the network. The service provided by all DNS servers translates hostnames to IP addresses. While the reverse is also possible, it is not always available for reasons of safety.

The Traceroute tool makes it possible to know which routers a packet passed through on the way to its destination. While this method makes it possible to discover the network, use of Traceroute has intrinsic limitations with respect to discovery of topology. For example, it does not detect unused links in a network, it does not expose the redundancy or the dependence of links (several IP links in same fiber) and it does not discover the multi access links.

Simple Network Management Protocol (SNMP) is a protocol that makes it possible to question a machine at its location in the network. For example, one can question a router to determine what machines are connected to that router. SNMP is primarily used to obtain the contents of the Management Information Base (MIB) stored by devices at each node of the network. The MIB is an information base, which may be defined by the RFC 2922, and should be present in each interconnection device. It should contain information about each port of the device, including information from endpoint devices connected to those ports. Techniques used to discover physical topology generally use SNMP and the Management Information Base II (MIB II). However, SNMP cannot be supported in certain networks, and its use is restricted within the majority of networks that do support it.

Techniques used to discover physical topology fall in two categories: passive and active. Passive techniques monitor the normal behavior of the network to infer the topology while active techniques introduce and track probe packets to discover the topology. Each of these categories will now be described.

Passive solutions include algorithms based on address forwarding tables (AFTs). In a switch, each port maintains an AFT that keeps the Media Access Control (MAC) addresses of packets it has received. If the switch supports SNMP, the AFT is stored in the entry "mib2-dotlbridge-dotldTp" of the MIB-II. Several solutions try to continually use this table to deduce the topology of the network. Some assume that the AFT table is complete and available at all the interfaces of the nodes, but this is generally not the case. Consequently, such solutions cannot account for the switches and other connective elements of the network that do not collaborate, namely, which do not support SNMP.

Algorithms based on the Spanning Tree Protocol (STP) record information of the tree of connectivity produced by the STP by listening to BPDU (Bridge Protocol Data Units) packets sent periodically by the switches. Algorithms are then applied to calculate topology. Unfortunately, not all elements of the network support STP, and some of those that do support STP do not send BPDU packets, which would often make these types of solutions invalid in heterogeneous networks.

Algorithms based on traffic compare the traffic in bytes on all the ports and carry out the best possible approximation of a connection between two ports. These algorithms are costly, require much time to calculate the result, and have difficulty functioning in broad networks. They also necessitate the support of SNMP by all the elements of the network, which is not necessarily the case.

Active solutions try to discover topology by injecting packets of discovery (i.e., probe packets) in the network while basing themselves on the normal operation of the routing. The goal of these solutions is to circumvent the limitations presented by the use of SNMP, in particular, the availability of partial information in MIBs and non-support of SNMP by several equipment networks. Protocol owners and the standards use the active approach. Table 1 lists the principal protocols owners available on the market.

**Table 1. List of topology discovery protocols**

| Inventor | Acronym | Name |
|---|---|---|
| Cisco Systems | | Cisco Discovery Protocol |
| Enterasys | CDP | Cabletron Discovery Protocol |
| Extreme | EDP | Extreme Discovery Protocol |
| Foundry | FDP | Foundry Discovery Protocol |
| Nortel | NDP | Nortel Discovery Protocol |
| IEEE | LLDP (IEEE 802.1AB) | Link Layer Discovery Protocol |
| TIA | LLDP-MED | Link Layer Discovery Protocol-Media Endpoint Device |

The Link Layer Discovery Protocol (LLDP) is a layer 2 protocol specified in the IEEE standard 802.1 AB-2005, which allows stations attached to an IEEE 802® LAN to advertise, to other stations attached to the same IEEEE 802 LAN, the major capabilities provided by the system incorporating that station, the management address or addresses of the entity or entities that provide management of those capabilities, and the identification of the station's point of attachment to the IEEE 802 LAN required by those management entity or entities.

The information distributed via this protocol is stored by its recipients in a standard Management Information Base (MIB), making it possible for the information to be accessed by a Network Management System (NMS) using a management protocol such as the SNMP.

IEEE 802.1AB can be utilized for many advanced features in a VoIP network environment. These features include basic configuration, network policy configuration, location identification (including for Emergency Call Service/ E911), inventory management, and more. This Standard provides extensions to the IEEE 802.1AB base protocol to allow for these functions, and also provides behavioral requirements for devices implementing the extensions to enable correct multi-vendor interoperation.

LLDP-MED is based on the IEEE's 802.1AB LLDP and facilitates information sharing between endpoints and network infrastructure devices. Such data will simplify the deployment of endpoints, enable advanced device firmware management and boost support for E911 in enterprise networks. LLDP-capable devices periodically transmit information in messages called Type Length Value (TLV) fields to neighbor devices. This information includes chassis and port identification, system name, system capabilities, system description and other attributes. LLDP-MED builds upon these capabilities by adding media- and IP telephony-specific messages that can be exchanged between the network and endpoints. The new TLV messages will provide detailed information on Power over Ethernet, network policy, media endpoint location for Emergency Call Services and inventory.

Most of existing solutions are proprietary and consequently only work in a homogenous environment (i.e., where all devices are from the same manufacturer). The proprietary solutions include CDP, EDP, FDP and NDP.

However, there are also non-proprietary solutions that can work in a heterogeneous environment. This is the case of with LLDP and LLDP-MED, although they can only work in an IEEE 802 network. Also, neither LLDP nor LLDP-MED can discover interconnection nodes and multimedia nodes at once. LLDP is used to discover interconnection nodes while LLDP-MED is used to discover multimedia endpoint devices. Furthermore neither LLDP nor LLDP-MED can discover link properties such as delay, jitter or loss rate, although those characteristics are essential for the management of quality of service.

The Internet Draft from PTOPOMIB Working Group entitled "Physical Topology Discovery Protocol and MIB", November 16, 1998 describes information interchange between adjacent nodes of a network, said information including chassis or port identifiers and a time to live information. The information is stored in an MIB of each node and may be used afterwards for determining connectivity.

Likewise, BREITBART Y ET AL: INFOCOM 2000, PROCEEDINGS, IEEE TEL AVIV, ISRAEL 26-30 MARCH 2000, PISCATAWAY, NJ: USA, IEEE, US, vol. 1, 26 MARCH 2000(2000-03-26), pages 265-274, XP010376028 ISBN: 978-0-7803-5880-5 describes methods for topology discovery in heterogeneous IP networks.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof

In accordance with embodiments of the invention, an network topology discovery mechanism is provided at the scale of an administrative domain. Information about nodes and links, such as bandwidth, delay, jitter, name and description of devices are collected and stored in a database by way of a protocol. The protocol is notifications-based, where each device notifies its presence to its neighbor, for example, at a regular interval, and may be implemented on all nodes belonging to the administrative domain.

One aspect of the invention according to some embodiments involves way to discover network topology in a Next Generation Network (NGN) including an access network comprising a plurality of nodes for providing access to an Internet protocol (IP) core network. According to this aspect, each node of the plurality of nodes transmits information related to an identity (ID) of that node, and a corresponding lifetime value of the ID information, to each node of the plurality of nodes adjacent the transmitting node. Each of the plurality of nodes also receives and stores ID information and a corresponding lifetime value of the ID information of each respective node adjacent the receiving node.

Each node of the plurality of nodes receives a request for management information base (MIB) information from a network administration entity of the NGN. The MIB information includes an ID and lifetime value of the ID information of that node, and the stored ID information and a corresponding lifetime value of the ID information of each of the respective adjacent nodes. Each of the plurality of nodes transmits the requested MIB information to the network administration entity, which discovers and monitors the state and topology of the plurality of nodes. Each of the request destinations is based on the stored ID information and corresponding lifetime value that was received in response to a previous request.

The invention provides a method for topology discovery of a plurality of network nodes connectable to one another by network links. The method is performed at each node and includes the steps of claim 1.

A system for topology and state discovery in a network including an access network and an IP core network comprises a plurality of node devices communicatively coupled to one another by a plurality of links, wherein one of the links is provided between any two of the node devices.

At least one edge node device is provided between a first group of the plurality of node devices and a second group of the plurality of node devices. The access network includes the first group of devices and the IP core network includes the second group of devices. Provided in each node device in the first group is an information sharing subsystem for transmitting information related to an identity (ID) of that node and a corresponding lifetime value of the ID information to each node device of the first group adjacent the transmitting node device, and an information aggregation subsystem for receiving and storing at each node device of the first group ID information and a corresponding lifetime value of the ID information of each respective node device adjacent the receiving node device, and an information providing subsystem for transmitting, from each node device of the first group, management information base (MIB) information of that node in response to a request from a network management entity, the MIB information including an ID and lifetime value of the ID information of that node, and the stored ID information and a corresponding lifetime value of the ID information of each of the respective adjacent nodes.

The access network may be an Ethernet network.

The system may further comprise a border node of the IP core network and a packet data network for collecting information about the node devices in the IP core network; and an admission control and resource management subsystem for providing admissions and policy decisions, session control and management, and setting up and taking down packet sessions.

Additional aspects and advantages of the invention will be set forth in the description that follows, and in part will be apparent from the description, or may be learned from practice of the invention. The aspects and advantages of the invention will be realized and attained by the system and method particularly pointed out in the written description and claims hereof as well as the appended drawings.

It is to be understood that both the foregoing general description and the following detailed description are exemplary and exemplary only and are not restrictive of the invention, as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention that together with the description serve to explain the principles of the invention. In the drawings:
FIG. 1 is a diagram of an NGN including a Network Topology & State Discovery Function in accordance with an exemplary embodiment.
FIG. 2 is a diagram of an NGN transport layer including a Network Topology & State Discovery Function in accordance with an exemplary embodiment.
FIG. 3 is a diagram of an exemplary internal architecture of the Network Topology & State Discovery Function.
FIG. 4 illustrates an exemplary TLV element format utilized in an exemplary discovery protocol performed at each network node.
FIG. 5a is a flow chart illustrating processes related to an exemplary discovery protocol operating in a initial mode in accordance with exemplary embodiments.
FIG. 5b is a flow chart illustrating processes related to an exemplary discovery protocol operating in an update mode in accordance with exemplary embodiments.
FIG. 6 is a diagram of an exemplary network in accordance with an exemplary embodiment of automatic topology discovery.
FIG. 7 is a logical model of a Network Topology and State Database in accordance with an exemplary embodiment.

### DETAILED DESCRIPTION

The various features of the invention will now be described with reference to the figures and in connection with a number of exemplary embodiments to facilitate an understanding of the invention. However, the aspects of the invention should not be construed as limited to these embodiments. Rather, these embodiments are provided so that the disclosure will be thorough and complete, and will fully convey the scope of the invention to those skilled in the art

Many aspects of the invention are described in terms of sequences of actions to be performed by elements of a computer system or other hardware capable of executing programmed instructions. It will be recognized that in each of the embodiments, the various actions could be performed by specialized circuits (e.g., discrete logic gates interconnected to perform a specialized function), by program instructions being executed by one or more processors, or by a combination of both. Moreover, the invention can additionally be considered to be embodied entirely within any form of computer readable carrier, such as solid-state memory, magnetic disk, and optical disk containing an appropriate set of computer instructions that would cause a processor to carry out the techniques described herein. A computer-readable medium would include the hollowing: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, them compiled, interpreted, or otherwise processed in a suitable manner, if necessary, and then stored in a computer memory.

Current development of Next-Generation Networks (NGN) is moving toward architectures in which all services offered to a particular customer can access the same subscriber database. In particular, network operators are working on Fixed and Mobile Convergence (FMC), which enables a combination of wired and wireless/mobile networks to provide services to customers without dependency on location, access technology and device. Thus, a service provider can offer its customers a consistent set of personalized services, independent of the access media they use. For example, the IMS architecture was first specified by the Third Generation Partnership Project (3GPP/3GPP2), and is now being embraced by other standards bodies such as Telecommunication and Internet Converged Services and Protocols for Advanced Networking body of the European Telecommunications Standards Institute (ETSI/TISPAN). These architectures and services can be used across multiple access types, such as GSM, WCDMA, CDMA2000, xDSL, Ethernet and Wireless LAN.

A converged architecture will integrate heterogeneous access technologies as well as heterogeneous interconnection network elements and provide guaranteed or relative end-to-end QoS and reliability. This will require QoS management interaction with the access and core networks to obtain information about the capabilities and available resources of the network and decide whether the QoS requirements can be met. To meet this end or others described herein, an aspect of embodiments consistent with the invention includes an automatic network topology discovery mechanism at the scale of an administrative domain (i.e., the domain over which topology discovery is to be performed). Information about network nodes and links, such as device interface type, port identity, information lifetime, bandwidth, delay, jitter, name and description of devices is collected and stored in a database by way of a protocol described in detail later. The protocol is notifications-based (e.g., each device notifies its presence to its neighbor at a regular interval) and is implemented on all devices belonging to the administrative domain. The collected information is utilized to build a topology graph of the network nodes and links, which is a prerequisite to, among other things, admission control, QoS routing, fault detection (e.g., node or link failure) and root cause analysis, and inter-provider quality of service. The topology may be continually updated, and thus provide current automatically generated topological and state information of the administrative domain.

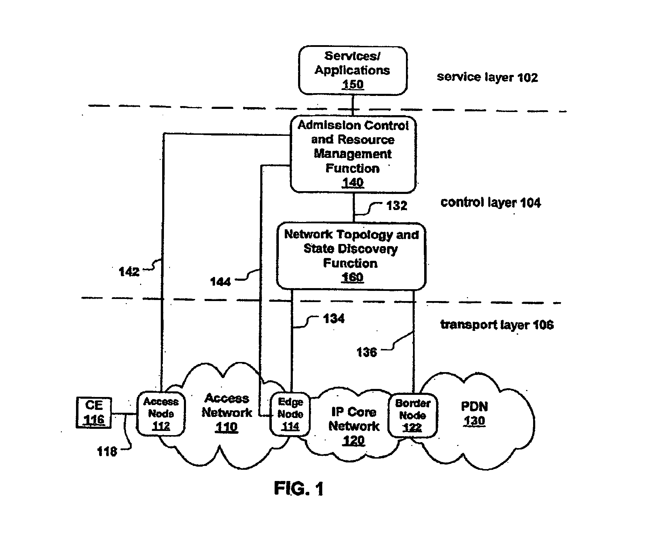

FIG. 1 is a schematic diagram illustrating an exemplary embodiment of a layered network, which may be utilized in an NGN fixed-mobile convergence architecture (e.g., 3GPP, 3GPP2 and/or TISPAN). The network includes a service layer 102, a control layer 104, and a transport layer 106, although some functionalities depicted in the network may be logically distributed in different manners (e.g., based on the type of platforms used and services provided).

The transport layer 106 shown in FIG. 1 includes an Access Network 110 including an Access Node 112 that may provide mobile and/or fixed customer equipment (CE) 116, such as NGN or legacy terminals, a SIP phone, soft-phone, set top box, multimedia terminal, a PC, or other wired or wireless terminals, access to request voice, data and multimedia services through an IP Core Network (CN) 120 and gateway Border Node 122 at an edge of the CN 120. The CE connects to the access node 112 via interface 118, which may be wired (e.g., copper), optical (e.g., fiber) or wireless (e.g., radio wave).

The CE 116 accesses the Access Network 110 and CN 120 under the control of the Admission Control and Resource Management Function (ACRMF) 140. The ACRMF 140 contains information relating to subscriber authentication, service authorization and location, makes generic policy decisions that are enforced in the Transport Layer, provides session control and management, and is responsible for setting up and taking down packet sessions.

Although the network shown in FIG. 1 includes one Access Network 110, the network may include more than one access network. Some examples of access networks providing access to the CN 120 include wireless local area networks (WLANs) (such as IEEE 802-based networks) connecting through a packet data gateway (PDG); cellular networks connecting through a Node B interface in an UMTS terrestrial radio access network (UTRAN)), through an eNodeB (eNB) interface in an Evolved UTRAN (E-UTRAN), and Global System for Mobile Communication (GSM)/enhanced data rate for GSM evolution (EDGE) radio access network (GERAN) connecting through a Radio Access Network (RAN) and a servicing GPRS support node (SGSN)/Gateway GPRS Support Node (GGSN); and xDSL access through Ethernet routes (e.g., metro Ethernet) connecting CE to a Broadband Access Server (BRAS) (e.g., through a Digital Subscriber Line Access Multiplexer (DSLAM)).

Through various gateways, such as Border Node 122, the IP CN 120 may provide access to other networks, such as a packet data network (PDN) 130, (e.g., Intranet, Internet), other packet switched (PS) networks, and circuit-switched (CS) networks (e.g., PSTN/ISDN) (not shown). The CE 116 may have connectivity to one gateway border node for accessing a single PDN, or simultaneous connectivity with more than one gateway border node for accessing multiple PDNs. The gateway border node 122 may perform, among other functions, policy enforcement, packet filtering for each user, charging support, lawful interception, and packet screening. The border node 122 (e.g., a PDN GW) may provide an anchor for mobility between trusted/untrusted 3GPP and non-3GPP technologies such as WiMAX and 3GPP2 (CDMA 1X and EvDO).

FIG. 1 also shows a Network Topology and State Discovery Function (NTSDF) 160 having an interface 132 with the ACRMF 140, an interface 134 with an Edge Node 114 (e.g., an IP Edge router) of the Access Network 110, and an interface 136 with Border Node 122 of the IP CN 120. The NTSDF 160 collects and stores network topology and state information from the Edge Node 114 of the Access Network 110 and the Border Node 122 of the IP CN 120; manages, filters and formats the stored information depending on desired output; provides decision information to the ACRMF 140; provides a path or a set of paths to a routing function; and may interface with NTSDFs of neighborhood domains.

The layer 2 protocol of the Access Network 110 terminates at the Edge Node 114, which translates the non-IP protocol of the Access Network 110 into the IP protocol of the IP CN 120. The information collected by the NTSDF 160 from the Access Network Edge Node 114 is used to discover layer 2 topology within the Access Network 110. The information about the Access Network 110 is obtained through the Edge Node 114 by way of a new discovery protocol operating at each node (e.g., switches) of the Access Network 110 and collected via the interface 134. In the Access Network 110, the ACRMF 140 interacts with policy enforcement points located in the Access Network 110, such as the Access Node 112 and IP Edge 114, via respective interfaces 142 and 144. The NTSDF 160 also collects information about the layer 3 topology (e.g., routers) of the IP Core network via interface 134 using protocols such as OSPF-TE or IS-IS-TE to discover the layer 3 topology of the IP CN 120.

The service layer 102 provides Services/Applications 150, such as telephony, instant messaging (IM), and presence services for both fixed and mobile users at the same time. It hosts application and content services, such as application servers, web servers etc., and may include or have access to a Home Subscriber Server (HSS) containing subscriber profiles and preferences. The Services/Applications 150 connects to users through the control layer.

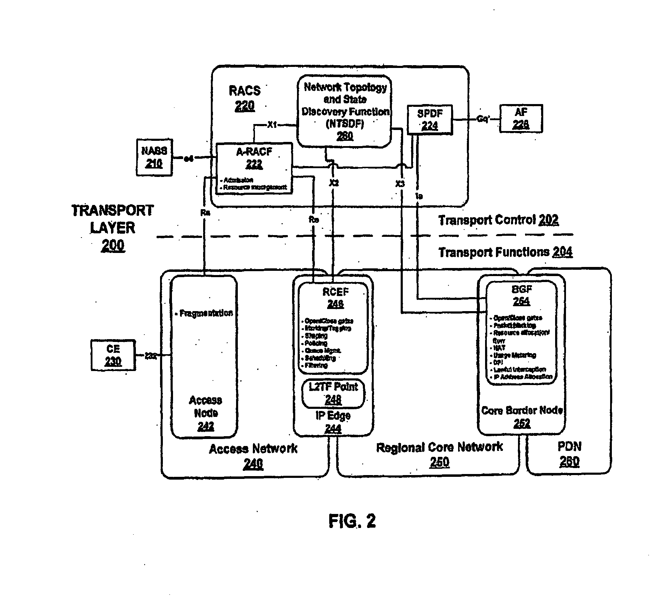

By way of example, FIG. 2 shows functional architecture of a TISPAN NGN Transport Layer 200 including an automatic NTSDF 260. The Transport Layer 200 functionally underlies a Service Layer (not shown), which together may generally be considered to form a two-layer architecture, although control features present in the transport layer may be logistically considered as part of a control layer. Through a collection of gateway functions, these two layers may interact with outside-world components such as the PSTN network, public land mobile network (PLMN), an ISDN network, IP Multimedia Subsystem (IMS) networks, Ipv4 and Ipv6 Packet Data Networks (PDN) (e.g., the Internet), or other IP networks.

FIG. 2 shows that the Transport Layer 200 may be further divided into two sublayers: a Transport Control Layer 202 and a Transport Functions Layer 204. As shown in FIG. 2, the Transport Control Layer 202 includes two subsystem modules: the Network Attachment Subsystem (NASS) 210 and the Resource and Admission Control Subsystem (RACS) 220. The Service Layer of the TISPAN includes various application servers and service control subsystems, such as an IP Multimedia Subsystem (IMS), a Public Switch Telephone Network (PSTN)/Integrated Service Digital Network (ISDN) Emulation subsystem. Under the control of the NASS 210 and the RACS 220, the Transport Layer 200 provides IP connectivity between customer equipment (CE) 230 (e.g., NGN or legacy terminals, a SIP phone, soft-phone, set top box, multimedia terminal, a PC etc.) and hides the transport technology underlying an IP layer of access and core networks, thus implementing the separation and interaction between the service layer and the Transport Layer 200.

The NASS 210 provides registration and initialization of the CE 230 to provide subscriber access to services in the service layer 102. The NASS 210 also provides network-level identification and authentication, manages the IP address space within the Access Network 240 (for example, dynamic provision of IP addresses), provides authentication to service sessions, access network configuration and location management

The RACS 220 provides admission control and directs network traffic. Before admitting traffic to or from an individual user, the RACS 220 checks the user profile stored in the NASS 210, any operator specific policies, and resources availability (e.g., subscribed or available bandwidth). Included in the RACS 220 is an Access-Resource and Admission Control Function (A-RACF) 222, which manages access to resources and provides control of admission and the allowance of the resources. More particularly, the A-RACF 222 receives requests from the Service-based Policy Decision Function (SPDF) 224 and, based on available resources in its control, processes or rejects those requests. The SPDF 224 is a functional element that provides higher-level applications in the Service Layer with a single point of contact. The SPDF 224 coordinates the resource reservations requests that it receives from the Application Function (AF) 226 (the application-level controller, such as a SIP server).

As shown in FIG. 2, the RACS 220 also provides access to services provided by a Core Border Node 252, which is located at the border of the Regional Core Network 250. While only one Core Border Node 252 is shown in FIG. 2, the Regional Core Network 250 may include more than one border gateway node as scalability may require, and to provide access to different IP networks.

The Core Border Node 252 includes a Border Gateway function (BGF) 254 that provides interfaces between two IP transport domains, although a BGF may be located at the border of other networks, such as a home network of a user or an access network. The BGF 254 may select a path across the Regional Core Network 250 to an egress node bordering the terminating sub-network at or near the end point, and may provide services such as Network Address Translation (NAT), gates opening/closing (gates filter a message according to the IP address/port), packet marking of outgoing stream, resource allocation and bandwidth reservation of upstream/downstream allocation and conversion of IP addresses and ports, policing the incoming stream, IP address allocation and anti-spoofing, usage metering, Deep Packet Inspection (DPI), interconnect between Internet Protocol version 4 (IPv4) networks and Internet Protocol version 6 (IPv6) networks, lawful interception and hiding topology.

The Tranport Layer 200 shown in FIG. 2 also includes an Access Network 240, which includes an Access Node 242 providing access to the customer equipment (CE) 230 and an IP Edge router 244. The CE communicates with the access node 242 through interface 232, which may include a wired, optical or wireless link, or combinations thereof. The IP Edge router 244 includes a Resource Control Enforcement Function (RCEF) 246 that enforces policy control based on subscriber profiles. The RCEF 246 opens/closes gates, marks and tags of outgoing packets, shapes the bandwidth to a defined bandwidth level for a specific service, group of services or for an individual user, polices bandwidth to be rate limited to a defined level for a specific service, group of services or an individual user, manages the queue, and provides scheduling and filtering. The IP Edge router 244 also includes a Layer 2 Termination Function (L2TF) Point 248 that provides termination of Layer 2 procedures of the Access Network 240.

The NTSDF 260 defines a new function in the RACS 220, which includes the services of collecting and storing network topology and state information, managing, filtering and formatting the stored information depending on the desired output, providing decision information to the admission control function, providing a path or a set of paths to the routing function, and interfacing with NTSDFs of neighborhood domains.

As shown in FIG. 2, NTSDF 260 communicates with the A-RACF 222 via interface X1, the IP Edge router 244 via interface X2, and with the Core Border Node 252 of the Regional Core Network 250 via interface X3. Information collected by the NTSDF 260 includes information from the IP Edge 244 relating to layer 2 topology and state of the Access Network 240, and information from the Core Border Node 252 and any additional gateways relating to layer 3 topology and state of the Regional Core Network 250. Thus, the NTSDF 260 provides an aggregation of topology and state information of both the layer 2 Access Network 240 and the layer 3 Regional Core Network 250.

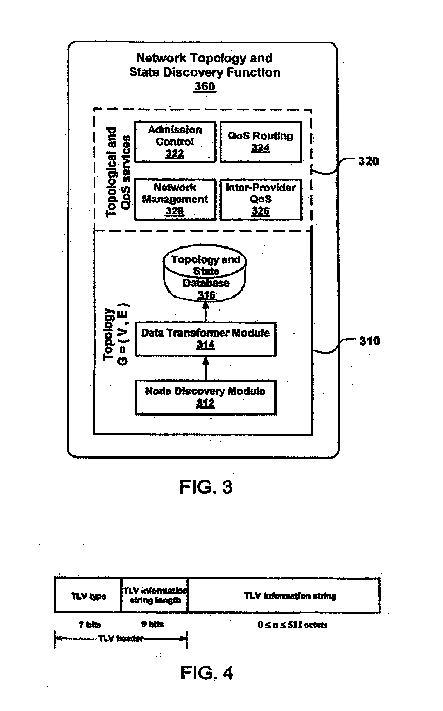

FIG. 3 illustrates the internal architecture of an NTSDF 360 according to some embodiments. The NTSDF 360 may have two layers: a lower Topology layer 310 which discovers and stores topology and state information into a Topology and State Database 316, and an upper Topological and QoS services layer 320 which provides services to other functions through an Admission Control module 322, a QoS Routing module 324, an Inter-Provider QoS services module 326, and a Network Management module 328, all of which will be described later.

The lower Topology layer 310 of the NTSDF 360 has specialized modules that perform multiple tasks related to topology and state discovery. It includes a Node Discovery Module 312, a Data Transformer Module 314 that receives information from the Node Discovery Module 312, and a Topology and State Database 316 that receives information output from the Data Transformer Module 314.

During topology discovery of an access network, for example, the Access Network 240 of FIG. 2, the Node Discovery Module 312 may explore the network hop-by-hop to extract the Management Information Base (MIB) of each node connected with the IP Edge 244. The information available in each network node contains not only MIB information about that node, but also remote MIB information about neighboring (i.e., adjacent) nudes that is gathered by a protocol running on each of the nodes. The protocol causes each node to broadcast its identity and capacities to its neighbors, and to receive similar information about one or more neighboring nodes from those neighboring nodes. The information may be transmitted periodically within frames, which may be formatted as three or more type, length and value elements (TLVs), and should at least include information conveying the identity of chassis of the interface sending the information, information conveying the identity of the port of the interface sending the information, and information specifying the time-to-live of the information. FIG. 4 shows the structure of an exemplary TLV format.

The time-to-live information includes a lifetime value (e.g., a number of seconds) indicating a period of time that the identity information is valid (e.g., how long the receiving device should maintain the received information). This time-to-live information associated with the remote (i.e., neighboring) node information provides the local node with a way to determine a timeout period for the information. For example, when a time period equal to the lifetime value elapses (e.g., because the local node does not receive a TLV before the information lifetime expires), the local node may remove the information related to the remote node from its remote MIB and notify the NTSDF 360 so that the topology and state of the network can be updated.

The information collected from the MIBs of node devices is passed to a Data Transformer Module 314, which prepares it for insertion into the Topology and State Database 316. Preparation by the Data Transformer Module 314 may include interpreting and transforming node and link properties extracted from the MIBs into a format and language corresponding to that of the Topology and State Database 316. For example, this module may interpret value 5 of the field *Device Type* of the TLV *capabilities* as an "IP telephone." The Data Transformer Module 314 also performs calculations of QoS parameters of links based on information collected by the Node Discovery Module 312. The transformed data is inserted into the Topology and State Database 316.

In some embodiments, the technology utilized by a node may not implement LLDP, be aware of LLDP type messages (e.g., a CE node using ATM DSL technology), or otherwise cannot operate using the protocol described above for collecting MIB information. However, topology discovery of such nodes in a heterogeneous network may still occur. Referring again to FIG. 2, for example, the Access Node 242 may request information from each node (i.e., CE 230) connecting to it, and thereafter collect and store this information. The Ra interface between the A-RACF 222 and the Access Node 242 may be utilized by the A-RACF 222 to retrieve information about CE nodes from the Access Node 242 (via a protocol such as SNMP), and the NTSDF 260 may receive and process this information from the A-RACF via the X1 interface.

The Topology and State Database 316 stores and manages the transformed information collected from the network nodes. It is the repository where modules of the Topological and QoS Services layer 320 find the information needed to perform their calculation or make their decisions. The Topology and State Database 316 contains the information from which the Network Topology and State Discovery Function 360 builds a topology graph (G) including vertices (V) and edges (E), which respectively represent links and nodes of the network.

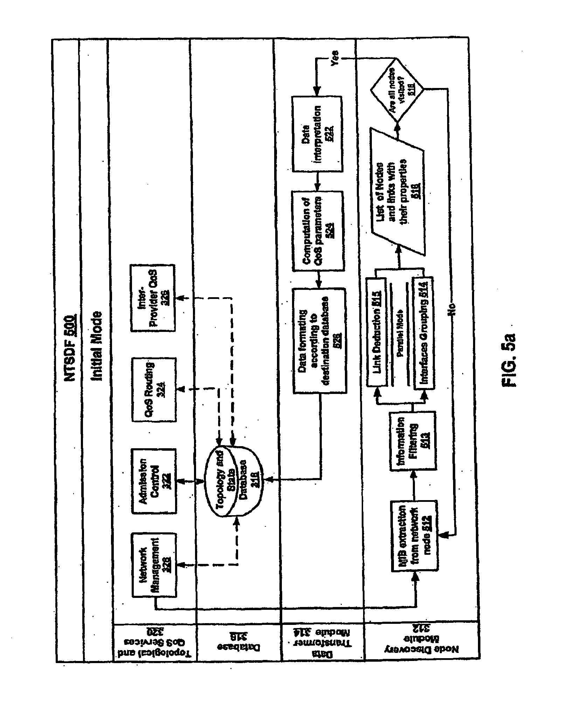

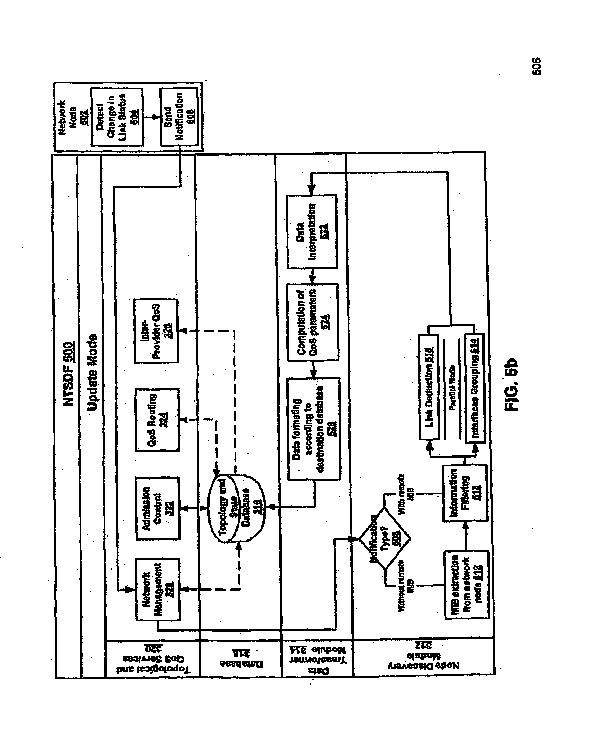

In some embodiments, a NTSDF may operate in a plurality of modes as illustrated by the NTSDF 500 shown in FIGS. 5a and 5b. FIG. 5a shows an initial mode, which may be performed at power up, at reset, periodically or manually as desired, to discover initial topology and state information of the network. FIG. 5b depicts an update mode performed to map changes in topology (e.g., network enhancements, link failure or link removal) that may occur after discovery in the initial mode.

With reference to FIG. 5a, the initial mode of network discovery starts in the Node Discovery Module 312 with the process 512 of extracting MIBs from network nodes. The IP Edge node is first visited and both local and remote MIBs are extracted. The extracted MIBs contain MAC addresses of adjacent nodes along with other information. These MAC addresses may be placed in a queue, and each MAC address in the queue is visited for MIB extraction if it has not been visited yet.

Next, the information extracted from MIBs in process 512 may be filtered in process 513 to keep only information of interest. For example, Table 2 contains an exemplary list of information that may be retained:

**Table 2**

| **MIB field** | Description |
|---|---|
| **chassis ID subtype** | The type of identifier used for the chassis |
| **chassis ID** | The identification assigned to the chassis containing the port |
| **port ID subtype** | The type of identifier used for the port |
| **port ID** | The identification assigned to the port |
| **system name** | The system's assigned name |
| **system description** | The system's description |
| **system capabilities** | The primary capabilities of the system |
| **enabled capabilities** | The system's enabled capabilities |
| **Timestamp** | The local clock values at the time of transmission and reception |

The filtered MIB information may be processed in by an interfaces grouping process 514, which addresses the possibility that a node may have multiple interfaces, each having its own MAC address. The information related to an interface corresponds to one entry in the MIB. When the information contained in the MIB is extracted, it should be associated to only one node.

A link deduction process 515, which may be performed in parallel with the interfaces grouping process 514, determines links between the nodes based on the information extracted from the MIBs and interface grouping. A link exists between two interfaces if the ID of the one is presented in the remote MIB of the other and vice versa. Processes 512-514 generate a list of nodes and links along with their corresponding properties at 516.

A check is performed in process 518 to determine whether all nodes in the queue have been visited. If not, processes 512-516 are repeated for each MAC address not yet visited. In this way, the Node Discovery Module 312, using the MIB information of the local node and remote MIB information of adjacent nodes, hops from node-to-node to eventually discover the initial topology and state of the network.

If the check performed in process 518 determines that all nodes have been visited, the list of nodes and links and their properties aggregated in the Node Discovery Module 312 may be further processed in the Data Transformer Module 314 before the collected information is entered in the Topology and State Database 316. More particularly, the collected data may be interpreted in process 522, QoS parameters may be computed in process 524, and the resulting data may be formatted in process 526.

The data interpretation process 522 interprets some node and link properties that are in numerical form, which may not be meaningful from a management perspective. Such properties may be given a semantic expression, for example, to help a network administrator more easily understand and use them. For example, if the value of the field < system capabilities > were 4, then the device would be interpreted as a router.

The computation of QoS parameters process 524 computes QoS parameters such as link delay, packet lost rate and jitter based on the information extracted from MIBs.

The data formatting process 526 of the Data Transformer Module 314 puts the nodes, links and their properties in the format that corresponds to the destination database. For example, the data may be put in the form of a relational, hierarchical or network database.

The details of the Topological and QoS Services layer 320 are now described with reference to FIG. 5a.

The Network Management module 328 manages the topology and state discovery, for example, start, stop, view, filter, print, export, etc. The Network Management module 328 also configures topology discovery protocol parameters, such as Send/Receive Mode, notification interval time, and other parameters.

The Admission Control module 322 of the Topological and QoS services layer 320 receives admission control requests from the A-RACF, checks the state of resources in the topology and state database, and responds to the admission control requests. If a response to an admission control request is positive, the Admission Control module 322 updates the database (e.g., to reflect a change in resource utilization). The Admission Control module 322 also may send requests to the admission control modules of the adjacent NTSDFs and receives requests from the admission control modules of the adjacent NTSDFs.

The QoS Routing module 324 receives QoS path requests from the AF or from the routing modules of the adjacent NTSDFs, computes a QoS path that satisfies the received path request, transmits the computed path to the requester, and sends requests to the routing modules of the adjacent NTSDFs.

The Inter-Provider QoS module 326 exposes classes of services to adjacent NTSDFs, and explores and selects classes of services of adjacent NTSDFs that satisfy the flow constraints.

In the update mode of the NTSDF 500 shown in FIG. 5b, a Network Node 502 may detect a change in the network (e.g., link failure, a new node added) at 504 and inform the NTSDF 500 by sending a notification message 506 to the Network Management Module 328. The update mode may be performed on a continuous basis to provide the modules Topological and QoS Services layer 320 with current network topology and status information.

In some embodiments, the send notification process 506 optionally sends one of two types of notification messages. In a first option, the Network Node 502 sends a first type of notification message at 506 that simply indicates something has changed in the remote MIB of the Network Node 502. Upon receiving this notification, the Network Management module 328 of the NTSDF 500 pulls the remote MIB of the Network Node 502 and performs discovery process, as illustrated by the path "without remote MIB" from the "Notification Type?" decision block 508. The NTSDF 500 operating in this way may process each update in the order they are received by extracting the MIB at 512, filtering the extracted MIB at process 513, and deducting any link changes and interface grouping in processes 514 and 515 as described above. However, because the processes of listing nodes and properties, and hopping to other nodes in the network would not be necessary when updating a previously determined topology configuration, processes 516 and 518 of FIG. 5a are not performed and the path from processes 514 and 515 proceeds to the Data Transformer Module 314. After interpreting, computing QoS parameters and formatting data related to the update information in respective processes 522-526, the Topology and State Database 316 is updated with this information.

In another option according to some embodiments, the Network Node 502 may send a second type of notification message at 506 that contains the remote MIB of that node. After receiving this message, the Network Management module 328 of the NTSDF 500 performs the discovery process as described above for the first type of message, but the process related to extracting the MIB from the node is not performed, as illustrated by path "with remote MIB" from the decision block 508, because the MIB has already been sent in the notification message.

The protocol for building and updating a topological graph is notifications based and may be implemented on all devices belonging to an administrative domain.

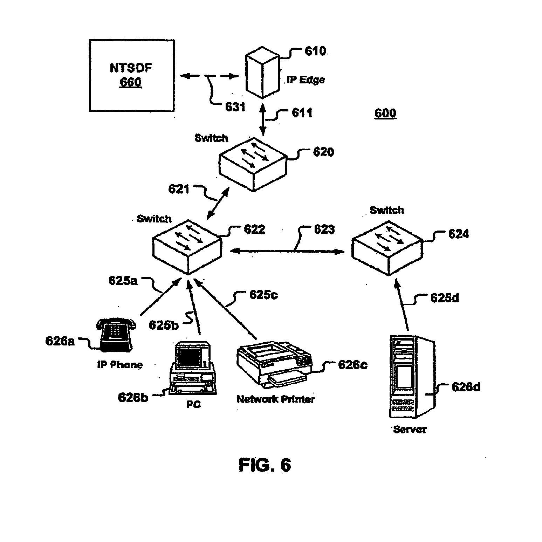

For example, FIG. 6 shows an exemplary network 600 that may be a part of an administrative domain according to some embodiments. While the network 600 includes only a small number of nodes for brevity, it should be appreciated that the concepts described herein may be extended to network embodiments including thousands of devices (e.g., a metro area access network). In network 600, an IP Edge router 610 is connected via link 611 to a switch 620. Switch 620, in turn, is connected via link 621 to switch 622. Switch 622 is connected via link 623 to switch 624; IP phone 626a, PC 626b and printer 626c are connected via respective links 625a, 625b and 625c to switch 622; and server 626d is connected to switch 624 via link 625d. The IP Edge router 610 also is connected to Network Topology and State Function (NTSDF) 660, which may be, for example, an NTSDF according to any embodiment described herein.

Each of the IP edge router 610, and switches 620, 622 and 624 exchanges MIB information bi-directionally with their neighboring nodes (i.e., switches) using protocol as described herein. At the lowest level of the network 600, each of the devices 626a-626c may unicast their MIB information to the switch 622, and the switch 624 may receives MIB information unicast from device 626d. Thus, each node stores both its own local MIB information and remote MIB information from any adjacent node.

During discovery, for example, an initial or restart discovery mode of the NTSDF 660, MIB information is first collected about the network 600 at the IP Edge router 610 (e.g., using SNMP). The MIB information includes the local MIB information of the IP Edge router 610 as well as remote MIB information related to switch 620 and switch 622 (e.g., identity and time-to-live information). Using this information, the NTSDF 660 determines that switches 620 and 622 must be visited and places their addresses into a queue for extraction of their MIB information. While the extracted MIB information of switch 620 may not include information regarding additional adjacent nodes other than switch 622 and the IP Edge 610, its local MIB provides other useful information, such as information from which QoS parameters may be computed. When the NTSDF extracts MIB information from Switch 622, it learns of the adjacent switch at node 624 and places it in the queue for extraction. These processes continue until all the nodes are identified and their respective node and link properties are stored in the database of the NTSDF 660.

After initial discovery, the NTSDF 660 may enter an update mode in which only changes to the initial topology are detected and processed to update the topology and state information of the network 600. For example, if the link 623 were to go down, switch 622 would cease to receive TLVs from the switch 624. After time-to-live of switch 624's information stored in switch 622 expires, switch 622 may send a notification message (or its MIB information) to the NTSDF 660, which causes the NTSDF 660 to update the topology and state database. Similarly, an existing node will notice a node and link added to the network 600 after receiving its MIB information.

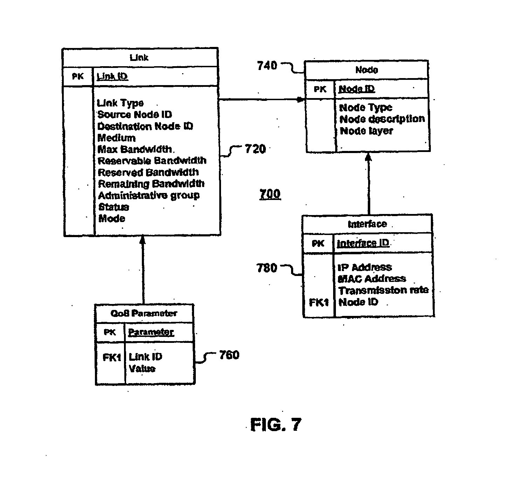

FIG. 7 shows an exemplary logical model 700 of the Network Topology and State Database (NTSD) module 316 in accordance with some embodiments. As depicted in FIG. 7, the logical model 700 includes a Link information table 720, a Node information table 740, a QoS Parameter information table 760 and an Interface information table 780, although other node and link information or organizational structures such as tables and/or linked lists may be used.

In some embodiments, the Link information table 720 stored in the NTSD module 700 may include, for each link, *Link ID* as the primary key; information relating to *Link Type,* which identifies whether a link is a point-to point link, a link to transit network, a link to a stub network, or a virtual link. *Source Node ID* information for identifying a Node ID of the sending device, *Destination Node ID* for identifying the *Node ID* of the receiving device, and *Medium*, which describes the media used for the signal transmission (e.g. coaxial cable, optical fiber, etc.). Link information 720 also may include *Max Bandwidth,* which is stored information relating to the maximum bandwidth of the link; *Reservable Bandwidth* that defines a maximum bandwidth that can be reserved for QoS traffic; *Remaining Bandwidth* defining maximum bandwidth minus reserved bandwidth, and *Reserved Bandwidth,* which is the part of the *Reservable Bandwidth* that is effectively reserved. The *Administrative Group* is the group the link belongs to for business or administrative purpose, and *Status* indicates if the link is active or inactive, and *Mode* indicates whether the link is simplex or duplex.

A node is located at either end of the each link in the networks. The Node information table 740 in FIG. 7 stores properties of the nodes. The primary key, *Node ID,* is a field containing an identifier, such as an alphanumerical string that contains the serial number of the endpoint For example, the string may be a value corresponding to the serial number value printed on the device itself (if available). If the serial number information is stored internally in a non-printable (e.g., binary) format, then the endpoint software may convert such information to a printable format, in a manner that is implementation-specific. If implementations support IETF RFC 2737, the use of the entPhysicalSerialNum object can be used for the *Node ID* field. The node information table 740 also may include a *Node Type* field, which indicates whether the node is a Network Connectivity Device or Endpoint Device, and if an Endpoint, which Endpoint Class it belongs to. The value of this field may be extracted from LLDP-MED Device Type of the capabilities TLV. *Node Description* may contain an alphanumeric string that is the textual description of the network entity. The system description preferably includes the full name and version identification of the system's hardware type, software operating system, and networking software. If implementations support IETF RFC 3418, the sysDescr object should be used for the *Node Description* field. Node information table 740 also may include the field *Node Layer* indicating the OSI layer to which the node belongs.

The QoS Parameter information table 760 of the logical module 700 contains quality of service capabilities information for links stored in the Link information table 720. The primary key in the QoS Parameter table 760 is *Parameter*, which expresses the QoS capabilities of a link in terms of QoS parameters such as delay, jitter, loss rate etc. Also stored in the table may be the field *Link ID* as a foreign key to the *Parameter* primary key, and the *Value* field, which may represent a *delay* value for a link, if delay is assigned to that link as a QoS *Parameter*.

The interface information table 780 of the NTSD module 700 is related to the node information table 740 and describes interface properties of devices at the network nodes. With reference to FIG. 7, the interface table 780 may include the field *Interface ID* as a primary key that uniquely identifies an interface on an endpoint device. The value of the *Interface ID* field may be extracted from the chassis ID field of the chassis ID TLV. Also logically stored in the information table 780 is the field *IP Address* for endpoint devices, which may be obtained from the chassis ID field of the chassis ID TLV (where the subtype is 5) (for connectivity devices, the IP address is not necessary); the field *Mac Address,* which contains a value corresponding to the MAC Address obtained from the chassis ID field of the chassis ID TLV (where the subtype is 4); the field *Transmission Rate,* which indicates a maximum transmission rate supported for the device (e.g. 10 Mbps, 1 Gbps); and the field *Node ID* as a foreign key describing the identity of the node, as described above.

As described above, the Topology and State Database 316 may have the logical model 700 and is included with the NTSDF 360 connected to the A-RACF 222. The X2 interface may be utilized to collect topological information of the network and to forward them to the NTSDF. When a new request of admission is received from the SPDF 224, the A-RACF 222 interrogates the NTSDF to obtain information on the state of the resources of the network..

Admission control is generally associated with each interconnection node in a network. In fact, to establish a flow path through a network, all interconnection nodes that belong to the path must accept the flow. With an NTSDF, admission control can be done on a single node. The node will have up-to-date information about network resources and their level of use. This will speed up the admission process.

When multiple routers perform admission control, the routers must maintain flow states. This requirement has led to the scalability problem of IntServ. However, by managing flow states on a single node (dimensioned adequately), routers are freed from maintaining flow states. Consequently, router computing power and storage capacity may be reduced because maintaining flow states is no lounger necessary.

QoS routing is about selecting the best path that satisfies QoS constraints of a flow. Those QoS constraints include bandwidth, delay, jitter, lost rate, etc. The number and the nature of constraints directly influence the complexity and the cost of computing the best path. With an NTSDF, the best path may be computed during the admission process. This avoids new computations and signalization in the network with respect to route flow's packets.

The knowledge of the true physical topology of a network is capital for many administrative tasks such as proactive and reactive resource management, event correlation, and root cause analysis. With an NTSDF, a network administrator can automatically perform a complete inventory of network devices, identify inactive connections, detect intruder, and proactively analyze the impact of a node or link failure in order to improve the network survivability.

In order to provide end-to-end QoS, providers must have agreements on classes of service and their respective performance. This approach is partially due to the fact that each provider defines and treats its classes of services in its own ways. To this end, an NTSDF may be used to dynamically negotiate the desired class of service. In fact, each provider may publish its classes of services with their performances so that other provider can dynamically choose the class which best matches their requirements for a particular flow.

## Claims

1. A method of network topology and state discovery in a Next Generation Network (NGN) comprising an access network (110) and an Internet protocol (IP) core network (120), the access network (110) comprising a plurality of nodes (114) for providing access to the IP core network (120), the method comprising:
- transmitting, from each node (114), information related to an identity (ID) of that node, and a corresponding lifetime value of the ID information, to each node of the plurality of nodes adjacent the transmitting node;
- receiving and storing, at each node, ID information, and a corresponding lifetime value of the ID information, of each respective node adjacent the receiving node; **characterized in that**
- receiving, at at least one visited node, a first request from a network administration entity (160, 260, 360) of the NGN for management information base (MIB) information, the MIB information including an ID and lifetime value of the ID information of that node (114), and the stored ID information and a corresponding lifetime value of the ID information of each of the respective adjacent nodes;
- transmitting, from each visited node (114), the requested MIB information to the network administration entity, the administration entity (160, 260, 360) for discovering and monitoring the state and topology of the plurality of nodes (114);
- extracting, for a subsequent request for MIB information, nodes of the plurality of nodes (114) to be selected that have not been visited yet, in accordance with the stored ID information and corresponding lifetime value transmitted from each of the visited nodes, and
- receiving, at each selected node (114), the subsequent request from the network administration entity (160, 260, 360) for the MIB information.

2. The method of claim 1, wherein the network administration entity determines links between the plurality of nodes (114) based on whether the received MIB information of one of the plurality of nodes includes ID information of another of the plurality of nodes, and vice versa.

3. The method of claim 1, wherein an IP edge router receives the first request from the network administration entity (160, 260, 360) for MIB information.

4. The method of claim 1, wherein the network administration entity filters the MIB information transmitted from the plurality of nodes, the ID information may optionally be an address of the node, and the network administration entity may optionally be further configured to group interfaces of each node including more than one interface and respective address to associate the received MIB information with only that node, the processes of grouping interfaces and determining the links preferably being performed in parallel.

5. The method of claim 2, further comprising:
- interpreting non-semantic node and/or link properties present in the received MIB information as a semantic format;
- computing at least one quality of service (QoS) parameter from MIB information received from the plurality of nodes;
- formatting data related to the links, nodes and associated properties according to a format compatible with a database format;
- storing the determined links and associated node and link properties in a topology and state database;
- receiving an admission control request from an admission control and resource management function;
- monitoring the state of resources in the topology and state database;
- responding to the admission control request; and
- updating the topology and state database based on the response to the request.

6. The method of claim 1, wherein the network administration entity:
- receives a QoS path request;
- computes a path satisfying said QoS path request, preferably during an admission process associated with the path request; and
- transmits the computed path to the requester.

## Patentansprüche

1. Verfahren zur Netztopologie- und Netzzustandserkennung in einem Netz der nächsten Generation (NGN), das ein Zugangsnetz (110) und ein Internetprotokoll (IP)-Kernnetz (120) umfasst, wobei das Zugangsnetz (110) eine Mehrzahl von Knoten (114) zum Bereitstellen von Zugang zum IP-Kernnetz (120) umfasst, wobei das Verfahren umfasst:
- Senden, aus jedem Knoten (114), von Information in Bezug auf eine Identität (ID) dieses Knotens und eines entsprechenden Lebensdauerwerts der ID-Information an jeden Knoten der Mehrzahl von Knoten benachbart zum sendenden Knoten;
- Empfangen und Speichern, an jedem Knoten von ID-Information und eines entsprechenden Lebensdauerwerts der ID-Information jedes jeweiligen Knotens benachbart zum empfangenden Knoten; **gekennzeichnet durch**
- Empfangen, an mindestens einem besuchten Knoten, einer ersten Anforderung von einer Netzverwaltungsinstanz (160, 260, 360) des NGNs für Managementinformationsdatenbank (MIB)-Informationen, wobei die MIB-Informationen eine ID und einen Lebensdauerwert der ID-Information dieses Knotens (114) sowie die gespeicherte ID-Information und einen entsprechenden Lebensdauerwert der ID-Information jedes der jeweiligen benachbarten Knoten umfassen;
- Senden von jedem besuchten Knoten (114) der angeforderten MIB-Informationen an die Netzverwaltungsinstanz, wobei die Verwaltungsinstanz (160, 260, 360) zum Erkennen und Überwachen des Zustands und der Topologie der Mehrzahl von Knoten (114) ist;
- Extrahieren, für eine nachfolgende Anforderung nach MIB-Informationen, von Knoten der Mehrzahl von Knoten (114), die ausgewählt werden sollen und die noch nicht besucht wurden, gemäß der gespeicherten ID-Information und dem entsprechenden Lebensdauerwert, die von jedem der besuchten Knoten gesendet werden, und
- Empfangen an jedem ausgewählten Knoten (114) der nachfolgenden Anforderung von der Netzverwaltungsinstanz (160, 260, 360) für die MIB-Informationen.

2. Verfahren nach Anspruch 1, wobei die Netzverwaltungsinstanz Verbindungen zwischen der Mehrzahl von Knoten (114) basierend darauf bestimmt, ob die empfangenen MIB-Informationen eines der Mehrzahl von Knoten ID-Information eines anderen der Mehrzahl von Knoten umfassen und umgekehrt.

3. Verfahren nach Anspruch 1, wobei ein IP-Kantenrouter die erste Anforderung von der Netzverwaltungsinstanz (160, 260, 360) für MIB-Information empfängt.

4. Verfahren nach Anspruch 1, wobei die Netzverwaltungsinstanz die von der Mehrzahl der Knoten gesendeten MIB-Informationen filtert, die ID-Information optional eine Adresse des Knotens sein kann, und die Netzverwaltungsinstanz optional ferner so konfiguriert sein kann, dass sie Schnittstellen jedes Knotens, der mehr als eine Schnittstelle umfasst, und eine jeweilige Adresse gruppiert, um die empfangenen MIB-Informationen nur mit diesem Knoten zu assoziieren, wobei die Prozesse des Gruppierens von Schnittstellen und Bestimmens der Verbindungen vorzugsweise parallel durchgeführt werden.

5. Verfahren nach Anspruch 2, ferner umfassend:
- Interpretieren von nichtsemantischen Knoten- und/oder Verbindungseigenschaften in den empfangenen MIB-Informationen als ein semantisches Format;
- Berechnen mindestens eines Dienstgüte (QoS)-Parameters aus den von der Mehrzahl von Knoten empfangenen MIB-Informationen;
- Formatieren von Daten in Bezug auf die Verbindungen, Knoten und assoziierten Eigenschaften gemäß einem Format, das mit einem Datenbankformat kompatibel ist;
- Speichern der bestimmten Verbindungen und der assoziierten Knoten- und Verbindungseigenschaften in einer Topologie- und Zustandsdatenbank;
- Empfangen einer Zulassungssteuerungsanforderung von einer Zulassungssteuerungs- und Betriebsmittelverwaltungsfunktion;
- Überwachen des Zustands von Betriebsmitteln in der Topologie- und Zustandsdatenbank;
- Antworten auf die Zulassungssteuerungsanforderung; und
- Aktualisieren der Topologie- und Zustandsdatenbank basierend auf der Antwort auf die Anforderung.

6. Verfahren nach Anspruch 1, wobei die Netzverwaltungsinstanz
- eine QoS-Pfadanforderung empfängt;
- einen Pfad, der die QoS-Pfadanforderung erfüllt, vorzugsweise während einer Zulassungsprozedur berechnet, die mit der Pfadanforderung assoziiert ist; und
- den berechneten Pfad an den Anfordernden sendet.

## Revendications

1. Procédé de découverte de topologie de réseau et d'état dans un réseau de prochaine génération (NGN) comprenant un réseau d'accès (110) et un réseau central à protocole Internet (IP) (120), le réseau d'accès (110) comprenant une pluralité de noeuds (114) pour fournir l'accès au réseau central IP (120), le procédé comprenant de :
- transmettre, depuis chaque noeud (114), de l'information relative à une identité (ID) de ce noeud, et une valeur de durée de vie correspondante de l'information ID vers chaque noeud de la pluralité de noeuds adjacents au noeud de transmission ;
- recevoir et mémoriser, au niveau de chaque noeud, une information ID et une valeur de durée de vie correspondante de l'information ID de chaque noeud respectif adjacent au noeud de réception ; **caractérisé en ce que**
- recevoir, au niveau d'au moins un noeud visité, une première demande émanant d'une entité de gestion de réseau (160, 260, 360) du NGN d'information de base d'information de gestion (MIB), l'information MIB incluant une ID et valeur de durée de vie de l'information ID de ce noeud (114), et l'information ID mémorisée et une valeur de durée de vie correspondante de l'information ID de chacun des noeuds adjacents respectifs ;
- transmettre, depuis chaque noeud visité (114), l'information MIB demandée vers l'entité de gestion de réseau, l'entité de gestion (160, 260, 360) découvrant et surveillant l'état et la topologie de la pluralité de noeuds (114) ;
- extraire, pour une demande subséquente d'information MIB, des noeuds de la pluralité de noeuds (114) à être sélectionnés qui n'ont pas encore été visités, conformément à l'information ID mémorisée et la valeur de durée de vie correspondante transmise depuis chacun des noeuds visités, et
- recevoir, au niveau de chaque noeud sélectionné (114), la demande subséquente d'information MIB émanant de l'entité de gestion de réseau (160, 260, 360).

2. Procédé selon la revendication 1, dans lequel l'entité de gestion de réseau détermine des liaisons entre la pluralité de noeuds (114) sur la base de ce que l'information MIB reçue d'un de la pluralité de noeuds inclut de l'information ID d'un autre de la pluralité de noeuds, et vice versa.

3. Procédé selon la revendication 1, dans lequel un routeur périphérique IP reçoit la première demande d'information MIB émanant de l'entité de gestion de réseau (160, 260, 360).

4. Procédé selon la revendication 1, dans lequel l'entité de gestion de réseau filtre l'information MIB transmise depuis la pluralité de noeuds, l'information ID peut optionnellement être une adresse du noeud et l'entité de gestion de réseau peut optionnellement être en outre configurée pour grouper les interfaces de chaque noeud incluant plus d'une interface et une adresse respective pour associer l'information MIB reçue avec seulement ce noeud, les processus de groupement des interfaces et de détermination des liaisons étant de préférence effectués en parallèle.

5. Procédé selon la revendication 2, comprenant en outre de :
- interpréter des propriétés non sémantiques de noeuds et/ou liaisons présentes dans l'information MIB reçue comme un format sémantique ;
- calculer informatiquement au moins un paramètre de qualité de service (QoS) d'après l'information MIB reçue depuis la pluralité de noeuds ;
- formater les données relatives aux liaisons, noeuds et propriétés associées selon un format compatible avec un format de base de données ;
- mémoriser les liaisons déterminées et les propriétés de noeuds et liaisons associées dans une base de données de topologie et d'état ;
- recevoir une demande de contrôle d'admission depuis une fonction de contrôle d'admission et de gestion de ressources ;
- surveiller l'état des ressources dans la base de données de topologie et d'état ;
- répondre à la demande de contrôle d'admission ; et
- mettre à jour la base de données de topologie et d'état sur la base de la réponse à la demande.

6. Procédé selon la revendication 1, dans lequel l'entité de gestion de réseau :
- reçoit une demande de qualité de service (QoS) de trajet ;
- calcule informatiquement un trajet satisfaisant à la demande de QoS de trajet, de préférence pendant une procédure d'admission associée à la demande de trajet ; et
- transmet le trajet calculé informatiquement au demandeur.
